# EUROPÄISCHE PATENTSCHRIFT

(11) **EP 0 372 564 B1**
(45) Veröffentlichungstag und Bekanntmachung des Hinweises auf die Patenterteilung: **20.10.1993**
(21) Anmeldenummer: 89122675.5
(22) Anmeldetag: 08.12.1989
(51) Int. Cl.: A01M 29/00

(54) **Einrichtung zur Abwehr von Vögeln**
Apparatus for expelling birds
Dispositif pour chasser des oiseaux

(30) Priorität: 09.12.1988 DE 3841558; 05.05.1989 DE 3914894
(43) Veröffentlichungstag der Anmeldung: 13.06.1990
(73) Patentinhaber: Seipp, Reiner, D-64342 Seeheim-Jugenheim (DE)
(72) Erfinder: Seipp, Reiner, D-64342 Seeheim-Jugenheim (DE)
(74) Vertreter: KUHNEN, WACKER & PARTNER

(56) Entgegenhaltungen:
- EP-A- 0 328 866
- CH-A- 557 137
- DE-C- 816 622
- US-A- 2 647 228

## Beschreibung

Die Erfindung betrifft eine Einrichtung zur Abwehr von Vögeln von Fassaden oder dergleichen, nach dem Oberbegriff des Anspruchs 1.

Bedingt durch eine an manchen Orten vorhandene Ansammlung von Tauben werden zum Teil erhebliche Schäden verursacht. Insbesondere werden Fassaden oder dergleichen durch Exkemente der Tauben sehr stark verschmutzt. Diese Verschmutzung stört nicht nur in ästhetischer Hinsicht. Die Exkremente, die nicht nur von Tauben sondern auch von anderen Vögeln stammen können, sind in höchstem Maße unhygienisch und können Krankheiten verursachen. Auch richten sie erheblichen Gebäudeschaden an, was bei historisch oder künstlerisch wertvollen Gebäudefassaden besonders gravierend ist.

Um Tauben, bzw. Vögel von Fassaden oder dergleichen fernzuhalten, werden die betroffenen Stellen mit Netzen, die aus Draht oder einem ähnlich geeigneten Material bestehen, überspannt.

Diese Netze haben jedoch den Nachteil, daß sie Vögel nicht sehr zuverlässig abwehren, da die Netze teilweise nicht richtig gespannt werden können, oder die Vögel in den Netzen selber Halt finden. Da mit diesen Netzen Stellen, die von Tauben als Ruheplatz genutzt werden, nur großflächig abgedeckt werden Können, verursachen sie oft einen unschönen Anblick der entsprechenden Einrichtung bzw. Fassade. Des weiteren können Einrichtungen wie Werbeträger bzw. Leuchtreklame, insbesondere frei ausragende Geschäftsschilder, wie sie zum Beispiel vor Geschäften oder Kaufhäusern zu finden sind, mit solchen Netzen nicht oder nur sehr aufwendig vor Vögeln geschützt werden.

Mit der US-A-2 647 228 ist eine Vorrichtung zum Vertreiben von Vögeln gemäß dem Oberbegriff des Anspruchs 1 bekannt, welche an Gebäuden installiert wird. Eine Induktionseinheit, die der Erzeugung von Hochspannungsimpulsen dient, ist an eine feldbildende Leitung und an zwei dazu parallel laufende Masseleitungen angeschlossen. Die feldbildende Leitung wird von Isolatoren getragen und ist von den Masseleitungen etwa 13 cm getrennt. Die Induktionseinheit führt der feldbildenden Leitung Hochspannungsimpulse zu, wodurch sich zwischen der feldbildenden Leitung und den Masseleitungen ein elektrisches Feld aufbaut. Versucht ein Vogel, sich auf der feldbildenden Leitung niederzulassen, gerät er in das elektrische Feld, verkürzt mit seinen Krallen den Abstand zwischen den Leitungen und bewirkt dadurch das Überspringen eines Funkens. Der Entladungspfad erstreckt sich von der felderzeugenden Leitung über den Körper des Vogels zu einer der Masseleitungen. Da die Entfernung zwischen den Drähten relativ weit ist, werden zur Bildung von Überspringfunken Hochspannungsimpulse großer Amplitude benötigt. Die Funktion der Vorrichtung ist nur dann gewährleistet, wenn die Stärke der Hochspannungsimpulse und der Abstand der Leitungsdrähte exakt aufeinander abgestimmt wird.

Mit der CH-A-557 137 ist eine Vogelabwehranlage zum Fernhalten von Vögeln von Bauwerken bekannt, welche einen Hochspannungs-Impuls-Generator, einen daran angeschlossenen Hochspannungs- und einen Masseleiter aufweist. Die Leiter sind parallel zueinander in etwa handbreiter Distanz angeordnet. Die Hochspannungsleitung ist als blanker Leitungsdraht ausgebildet und wird auf Isolatoren verlegt. Um den Hochspannungsleiter herum entsteht ein elektrostatisches Feld. Ein in die Nähe des Hochspannungsleiters geratener Vogel soll bis zu einer Distanz von etwa 10 cm vom Feld aufgeladen werden. Beim Niederlassen auf den Hochspannungsleiter entlade sich das statische Feld und der Vogel erhielte einen kurzen Spannungsstoß. Da sich das elektrische Feld in erster Linie zwischen den beiden Leitern und nicht zwischen dem Hochspannungsleiter und dem Vogel aufbaut, ist die Funktion der Vogelabwehranlage zumindest fragwürdig. Ein Funktionieren der Vorrichtung wäre allenfalls bei Verwendung von Hochspannungsimpulsen extrem großer Amplitude denkbar. Die Erzeugung und Beherrschung solch hoher Spannungen erfordern jedoch einen großen technischen Aufwand.

Mit der nachveröffentlichten EP-A-0 328 866 ist eine Vorrichtung zum Vertreiben von Tauben bekannt. An exponierten Kanten und/oder Flächen der gegen die Tauben zu schützenden Gebäude oder dergleichen werden zwei elektrische Leitungsdrähte im Abstand zueinander isoliert angebracht. Die Leitungsdrähte werden durch einen Hochspannungs-Impulsgeber mit elektrischen Impulsen hoher Spannung und geringer Stromstärke beaufschlagt. Wenn sich eine Taube auf den Leitungsdrähten niederläßt und diese dabei kurzschließt, wird sie durch einen elektrischen Hochspannungsstoß vertrieben. Die Leitungsdrähte bestehen aus Aluminium-Legierungsrundstangen von vorzugsweise 3 mm Durchmesser. Die Steifheit der Leitungsdrähte und die Abstände der Abstandshalter sind derart gewählt, daß sich die Leitungsdrähte auch unter dem Gewicht der darauf niederlassenden Tauben nicht wesentlich durchbiegen. Leitungsdrähte dieser Beschaffenheit sind nicht nur aus kurzer sondern auch aus größerer Entfernung wahrnehmbar und treten optisch störend in Erscheinung.

Aufgabe der Erfindung ist es, eine Einrichtung zur Abwehr von Vögeln von Fassaden oder dergleichen gemäß dem Oberbegriff des Anspruchs 1 zu schaffen, deren Funktionsfähigkeit auf einfache Weise herstellbar und aufrechterhaltbar ist.

Die Lösung dieser Aufgabe erfolgt durch die kennzeichnenden Merkmale des Anspruchs 1.

Ein wesentlicher Vorteil der erfindungsgemäßen Einrichtung besteht darin, daß die Drähte als elektrische Leiter sehr dünn ausgeführt werden können und daher bereits aus relativ geringer Entfernung optisch nicht mehr störend in Erscheinung treten. Dabei können die Isolatoren freizügig den örtlichen Verhältnissen entsprechend befestigt werden und so Flächenbereiche beliebiger Größe und Ausgestaltung den jeweiligen Erfordernissen entsprechend geschützt werden. Die erfindungsgemäße Einrichtung kann in vorteilhafter Weise gezielt auch an solchen Stellen angebracht werden, die für eine großflächige Abdeckung durch Netze nicht oder nur sehr schlecht geeignet sind. Des weiteren kann die vorstehend beschriebene Einrichtung auch ideal an Werbeschildern bzw. Leuchtbuchstaben oder dergleichen angebracht werden, zumal sie auch an deren Konturen angepaßt werden kann. Durch die Anordnung der beiden mit dem Netzgerät verbundenen Drähte bekommt eine Taube in ähnlicher Weise wie eine Kuh auf der Weide von einem dort gebräuchlichen elektrischen Weidezaun einen elektrischen Schlag, wenn sie sich an der Stelle niederlassen will, an der die Einrichtung gemäß der vorliegenden Erfindung angebracht ist, da der zweite Draht das für einen Stromfluß notwendige Massepotential aufweist. Mittels der Isolatoren kann wenigstens einer der beiden Drähte elektrisch isoliert mechanisch an einer zu schützenden Stelle angebracht werden. Anstelle des zweiten Drahtes kann auch ein anderer elektrischer Leiter vorgesehen werden.

Dieser kann insbesondere durch den zu schützenden Gegenstand selbst, wie etwa eine Fahnenstange, bzw. einen Teil davon, wie etwa eine Dachrinne oder ein Schneefanggitter gebildet sein, wenn dieser aus elektrisch leitendem Material besteht und, sofern er nicht ohnehin an Erde liegt, geerdet wurde. Dann braucht in vorteilhafter Weise nur mit einem einzigen Draht gearbeitet werden, der optisch noch weniger in Erscheinung tritt und noch geringeren Aufwand verursacht. Ein sich niederlassender Vogel übergreift mit seinen gebogenen Krallen den Einzeldraht, erzeugt über die Krallen Stromfluß zum Massebauteil hin und schießt davon, lange bevor der Draht durch das Gewicht des Vogels, mit dem Massebauteil unmittelbar in Berührung gelangen kann, so daß Kurzschlüsse nicht auftreten. Durch den erfindungsgemäßen Aufbau der Einrichtung ergibt sich weiterhin der Vorteil, daß keine großen vorbereitenden Arbeiten an den zu schützenden Einrichtungen durchzuführen sind.

Dadurch, daß jeder Draht einen Durchmesser von 0,01 mm bis 1 mm, vorzugsweise von 0,1 mm bis 0,3 mm, insbesondere 0,2 mm aufweist, wird erreicht, daß kein Vogel auf einem Einzeldraht Halt findet, ohne den anderen Draht zu berühren.

Vorteilhafte Weiterbildungen der Erfindung ergeben sich aus den Unteransprüchen.

Gemäß Anspruch 2 bestehen die Isolatoren aus durchsichtigem oder durchscheinendem Material. Dadurch ergibt sich ebenso der Vorteil, daß sie den optischen Eindruck der zu schützenden Einrichtung nicht wesentlich verändern.

Gemäß Anspruch 3 sind die beiden Drähte in einem Abstand von 10 mm bis 30 mm, vorzugsweise 15 mm bis 25 mm, insbesondere 20 mm voneinander angeordnet, wodurch in vorteilhafter Weise erreicht wird, daß insbesondere Tauben mit ihren Krallen beide Drähte umfassen.

Durch die Verwendung von Acrylglas für die Isolatoren gemäß Anspruch 4 erhält man in vorteilhafter Weise einen leicht zu bearbeitenden, durchscheinenden und witterungsbeständigen Isolator.

Durch die Anordnung der Isolatoren in einem Abstand von 0,1 m bis 1 m, vorzugsweise 0,25 m bis 0,75 m insbesondere 0,5 m gemäß Anspruch 5, wird eine geeignete maximale Spannweite der Drähte erreicht. Insbesondere wird ein zu starkes Schwingen des Drahtes und ein dadurch möglicher Kurzschluß verhindert.

Gemäß Anspruch 6 ist der Draht durch umfangsseitig geschlossene öffnungen in den Isolatoren geführt. Dadurch ergibt sich der Vorteil, daß die Drähte axial beweglich und gut geführt sind.

Gemäß Anspruch 7 wird der Draht durch Federn gespannt. Dadurch wird in vorteilhafter Weise erreichte daß der Draht unter Zug steht und gegen überdehnung geschützt ist.

Dadurch, daß gemäß Anspruch 8 der Draht an den Federn ein- bzw. ausgehängt werden kann, ist die Einrichtung bei eventuellen Reparaturarbeiten an den zu schützenden Stellen kein Hindernis, da die Drähte leicht entfernbar sind.

Dadurch, daß die Federn gemäß Anspruch 9 in einem Abstand von 1 m bis 20 m, vorzugsweise von 5 m bis 15 m insbesondere 10 m angeordnet sind, erreicht man in vorteilhafter Weise eine geeignete Verteilung der Federlänge, wodurch auch zu lange Federn vermieden werden können.

Da gemäß Anspruch 10 als Netzgerät in vorteilhafter Weise ein herkömmliches Netzgerät für Weidezäune verwendet werden kann, wird in einfacher Weise Schutzbestimmungen entsprochen.

Weitere Einzelheiten, Merkmale und Vorteile der vorliegenden Erfindung ergeben sich aus der nachfolgenden Beschreibung unter Bezugnahme auf die Zeichnung.

Es zeigt:
- Fig. 1: in schematischer Weise die Anbringung der Anlage an einem Gebäudevorsprung, und
- Fig. 2: in schematischer Weise die Anbringung der Einrichtung an einem Werbetransparent.

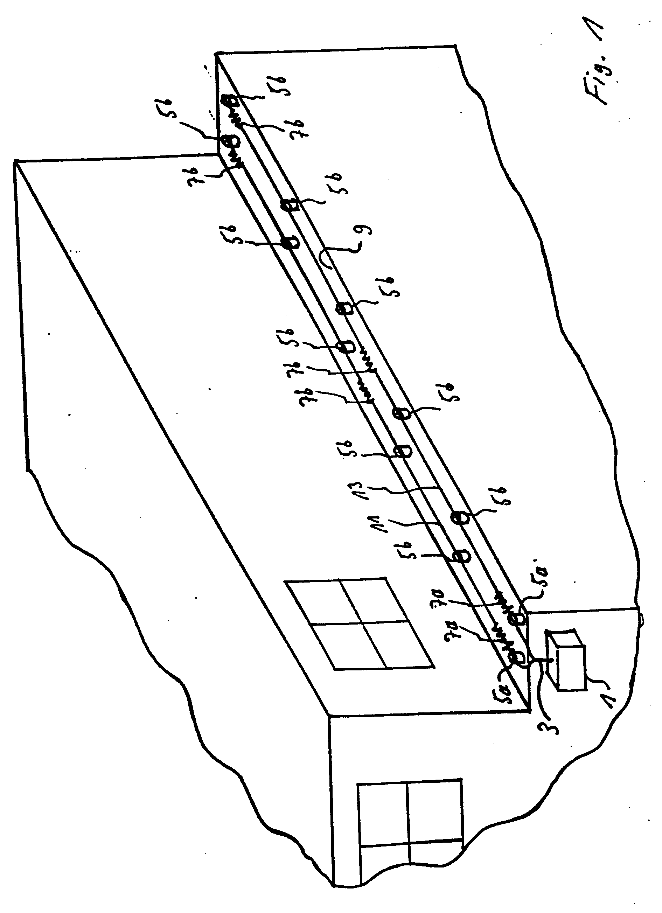

Eine vorteilhafte Ausführungsform der vorliegenden Erfindung weist gemäß Fig. 1 ein Netzgerät 1 auf, welches zur Erzeugung von Hochspannungsimpulsen ausgelegt ist. Das Netzgerät 1 ist ein herkömmliches Netzgerät, wie es für Weidezäune verwendet wird. Jedoch kann als Netzgerät ein beliebiges Netzgerät verwendet werden, welches Hochspannungsimpulse erzeugt, die geeignet sind, Vögeln einen solchen elektrischen Schlag zu versetzen, daß sie zum sofortigen erneuten Auffliegen veranlaßt werden. Das Netzgerät selbst kann aus der allgemeinen Energieversorgung gespeist werden, d. h. mit 220 V Wechselstrom oder als netzunabhängiges Netzgerät von einem Akkumulator oder dergleichen gespeist werden. Eine Verbindungsleitung 3 von Netzgerät 1 zu ersten Isolatoren 5a besteht aus einem doppelt isolierten Hochspannungskabel 3. An den Isolatoren 5a wird das Verbindungskabel 3 mit ersten Federn 7a verbunden. Zweite Isolatoren 5b sind zu den ersten Isolatoren 5a und zueinanderin einem Abstand von 0,5 m an einem Mauervorsprung 9, von dem Vögel abgewehrt werden sollen, angebracht. Die Isolatoren 5a, 5b sind jeweils paarweise nebeneinander angeordnet, so daß sich ein Drahtabstand von 20 mm ergibt. Ein erster elektrisch leitender Draht 11 ist über eine der Federn 7a mit dem Impulsausgang des Netzgerätes 1 verbunden. Ein zweiter elektrisch leitender Draht 13 ist über eine weitere der Federn 7a mit dem Masseausgang des Netzgerätes 1 verbunden. Die beiden Drähte 11 und 13 sind in einem Abstand von 10 m durch weitere Federn 7b unterbrochen. Die beiden Drähte 11 und 13 sind an ihrem Ende über weitere der Federn 7b mit weiteren der Isolatoren 5b verbunden.

Vom Netzgerät zur Anlage geht ca. jede Sekunde ein Impuls an den ersten elektrisch leitenden Draht 11. Die Impulslänge ist ca. 0,5 ms. Zu vergleichen ist dieser Impuls mit der statischen Aufladung einer Person mit z.B. Lederschuhen bei trockenem Teppichboden und der Entladung an einer Tür oder Türzarge. Von dem Netzgerät 1 können auch weitere Einrichtungen für diverse Werbetransparente bzw. Leuchtreklamen versorgt werden. Ebenso können großflächige Hausfassaden, z.B. aus Eloxal oder Stein, mit einer erfindungsgemäßen Einrichtung zur Abwehr von Vögeln ausgestattet werden.

Will sich ein Vogel auf dem Mauervorsprung niederlassen, berührt er beide Drähte und erhält, ähnlich wie die Kuh auf der Weide beim elektrischen Weidezaun, einen elektrischen Schlag und wird zum sofortigen erneuten Auffliegen veranlaßt. Durch die Federn 7a, 7b kann gewährleistet werden, daß die Drähte 11 und 13 nicht überdehnt werden, wenn sich ein Vogel auf die beiden Drähte niederläßt. Des weiteren kann durch die Federn 7a, 7b eine genügend große Spannung erreicht werden, die verhindert, daß die Drähte 11 und 13 so stark schwingen, daß sie sich gegenseitig berühren. Durch die Isolatoren 5a, 5b können die Drähte 11 und 13 in einem geeigneten Zustand nebeneinander angeordnet und auf dem Mauervorsprung befestigt werden.

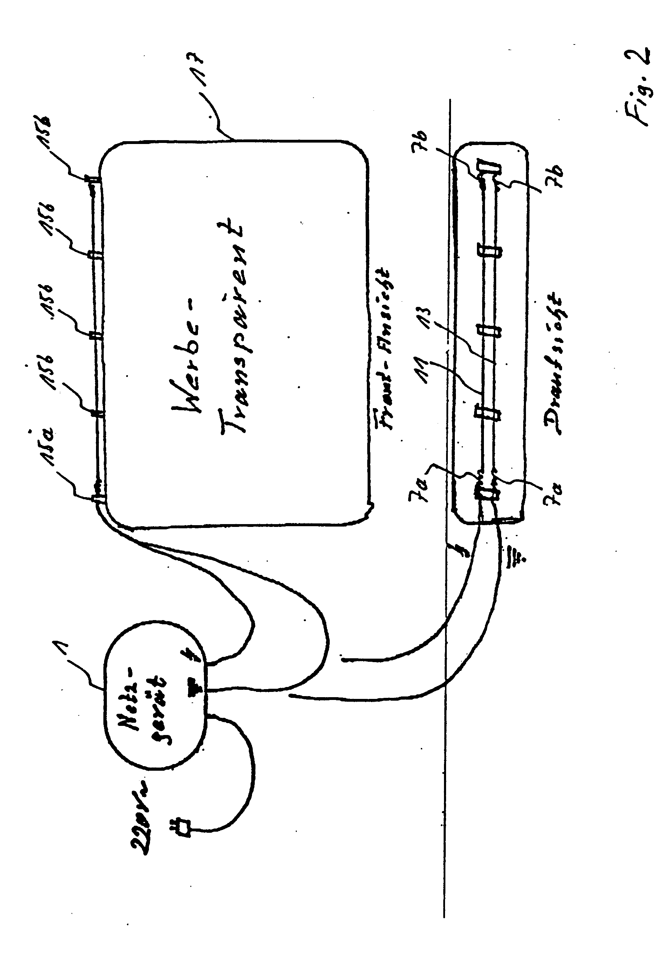

In Fig. 2 ist schematisch dargestellt, wie die Einrichtung an einer Leuchtreklame 17 angebracht ist. Dabei sind gleiche Teile wie bei der Ausführungsform gemäß Fig. 1 zur Verbesserung der Übersichtlichkeit mit gleichen Bezugszeichen versehen; hinsichtlich des grundsätzlichen Aufbaues und der Wirkungsweise kann auf die Erläuterungen zur Ausführungsform gemäß Fig. 1 Bezug genommen werden, so daß nachfolgend lediglich die Unterschiede zu Fig. 1 erläutert werden.

In ähnlicher Weise wie bei der ersten Ausführungsform wird in dieser Ausführungsform der Impulsausgang des Netzgerätes 1 an einem ersten Isolator 15a mit einer Feder 7a verbunden, sowie der Masseausgang des Netzgerätes 1 mit einer weiteren der Federn 7a verbunden, wo bei der Impulsausgang des Netzgerätes 1 über ein einzelnes doppelt isoliertes Hochspannungskabel zu dem ersten Isolator 15a geführt wird. Der Masseausgang des Netzgerätes 1 wird über eine herkömmliche Leitung mit dem ersten Isolator 15a verbunden. Des weiteren sind an dem Isolator 15a die Federn 7a mit zwei Drähten 11, 13 verbunden. Da die Drähte 11, 13 sich nur über die relativ kurze Länge eines Werbetransparentes 17 erstrecken, sind in dieser Ausführungsform die beiden Drähte 11, 13 nicht durch Federn 7b unterbrochen. An ihrem Ende sind die beiden Drähte 11, 13 über Federn 7b mit einem der zweiten Isolatoren 15b verbunden. Da sich die Wirkungsweise dieser Ausführungsform nicht von der Wirkungsweise der ersten Ausführungsform unterscheidet, wird auf eine weitere Beschreibung verzichtet.

Der zweite, am Masseausgang des Netzgerätes liegende bzw. gegebenenfalls auf sonstige Weise geerdete Draht 13 kann entfallen, wenn das zu schützende Bauteil wie z. B. ein metallisches Schneefanggitter selbst elektrisch leitend ist und geerdet ist oder geerdet wird.

Der abschreckende Stromschlag wird dann durch Spannungsentladung zwischen dem Draht 11 und dem Massebauteil über die Krallen des Vogels erzeugt, bevor bei dem gewählten Abstand des Drahtes 11 vom Massebauteil und der gewählten Drahtspannung ein Kurzschluß durch Berührung des Drahtes 11 mit dem Massebauteil auftreten kann.

## Patentansprüche

1. Einrichtung zur Abwehr von Tauben von Fassaden oder dergleichen, mit
wenigstens einem elektrisch leitenden Draht (11),
einem Netzgerät (1) zur Erzeugung von Hochspannungsimpulsen, wobei der elektrisch leitende Draht (11) mit dem Impulsausgang des Netzgerätes (1) verbunden ist, und
Isolatoren (5a, 5b, 15a, 15b), die wenigstens den am Impulsausgang liegenden Draht (11) tragen, wobei
im Abstand von dem Draht (11) ein geerdetes, elektrisch leitendes zu schützendes Bauteil wie eine Fahnenstange, eine Regenrinne, ein Schneefanggitter oder dergleichen, oder aber ein zweiter elektrisch leitender Draht (13) vorgesehen ist, der mit dem Masseausgang des Netzgerätes (1) verbunden ist und in etwa parallel zu dem ersten Draht (11) angeordnet ist, dadurch gekennzeichnet, daß der jeweilige Abstand zwischen dem Draht (11) und dem geerdeten, elektrisch leitenden Bauteil bzw. dem zweiten Draht (13) so gering bemessen ist, daß eine Taube beim Niederlassen den Draht (11) und das geerdete, elektrisch leitende Bauteil bzw. beide Drähte (11, 13) mit einer Kralle gleichzeitig berührt, und
der Draht (11 bzw. 13) einen Durchmesser von 0,01 mm bis 1 mm, vorzugsweise von 0,1 mm bis 0,3 mm, insbesondere von 0,2 mm aufweist.

2. Einrichtung nach Anspruch 1, dadurch gekennzeichnet, daß die Isolatoren (5a, 5b; 15a, 15b) aus einem durchsichtigen oder durchscheinenden Material bestehen.

3. Einrichtung nach einem der Ansprüche 1 oder 2, dadurch gekennzeichnet, daß die beiden Drähte (11, 13) in einem Abstand von 10 mm bis 30 mm, vorzugsweise von 15 mm bis 25 mm, insbesondere von 20 mm voneinander angeordnet sind.

4. Einrichtung nach einem der Ansprüche 1 bis 3, dadurch gekennzeichnet, daß die Isolatoren (5a, 5b, 15a, 15b) aus Acrylglas bestehen.

5. Einrichtung nach einem der Ansprüche 1 bis 4, dadurch gekennzeichnet, daß die Isolatoren (5a, 5b, 15a, 15b) in einem Abstand von 0,1 m bis 1 m, vorzugsweise von 0,25 m bis 0,75 m, insbesondere von 0,5 m angeordnet sind.

6. Einrichtung nach einem der Ansprüche 1 bis 5, dadurch gekennzeichnet, daß der Draht (11 bzw. 13) durch umfangsseitig geschlossene Öffnungen in den Isolatoren (5a, 5b, 15a, 15b) geführt sind.

7. Einrichtung nach einem der Ansprüche 1 bis 6, dadurch gekennzeichnet, daß der Draht (11 bzw. 13) durch Federn (7a, 7b, 7c, 7d) gespannt ist.

8. Einrichtung nach Anspruch 7, dadurch gekennzeichnet, daß der Draht (11 bzw. 13) an den Federn ein- bzw. aushängbar ist.

9. Einrichtung nach Anspruch 7 oder 8, dadurch gekennzeichnet, daß die Federn (7a, 7b) in einem Abstand von etwa 1 m bis 20 m, vorzugsweise 5 m bis 15 m, insbesondere von 10 m angeordnet sind.

10. Einrichtung nach einem der Ansprüche 1 bis 9, dadurch gekennzeichnet, daß das Netzgerät (1) ein herkömmliches Netzgerät für Weidezäune ist.

## Claims

1. Apparatus for expelling pigeons from façades or the like, with
at least one electrically conducting wire (11),
a power supply unit (1) for the production of high voltage impulses, the electrically conducting wire (11) being connected to the impulse output of the power supply unit (1), and
insulators (5a,5b,15a,15b), at least supporting the wire (11) at the impulse output,
an earthed electrically conducting protective structural member, such as a flagstaff, a gutter, a snow guard grating or the like or else a second electrically conducting wire (13), being provided at a distance from the wire (11) and being connected to the earth terminal of the power supply unit (1) and being arranged roughly in parallel with the first wire (11), characterised in that the distance between the wire (11) and the earthed, electrically conducting structural member or the second wire (13) is of such small dimensions that a the claw of a perching pigeon simultaneously comes into contact with the wire (11) and the earthed, electrically conducting structural member or both wires (11,13), and in that the wire (11 or 13) has a cross-section of 0.01 mm to 1 mm, preferably 0.1 to 0.3 mm and in particular 0.2 mm.

2. Apparatus according to claim 1, characterised in that the insulators (5a,5b;15a,15b) are made of a transparent or translucent material.

3. Apparatus according to any of claims 1 or 2, characterised in that the two wires (11,13) are arranged at a distance of 10mm to 30 mm, preferably 15 mm to 25 mm, in particular 20 mm, from each other.

4. Apparatus according to any of claims 1 to 3, characterised in that the insulators (5a,5b;15a,15b) are made of acrylic glass.

5. Apparatus according to any of claims 1 to 4, characterised in that the insulators (5a,5b;15a,15b) are arranged at a distance of 0.1 m to 1 m, preferably 0.25 m to 0.75 m, in particular 0.5 m, from each other.

6. Apparatus according to any of claims 1 to 5, characterised in that the wire (11 or 13) is inserted through peripherally closed openings in the insulators (5a,5b; 15a,15b).

7. Apparatus according to any of claims 1 to 6, characterised in that the wire (11 or 13) is tensioned by means of springs (7a,7b,7c,7d).

8. Apparatus according to claim 7, characterised in that the wire (11 or 13) can be hooked on to or unhooked from the springs.

9. Apparatus according to claim 7 or 8, characterised in that the springs (7a,7b) are spaced apart a distance of about 1 m to 20 m, preferably 5 m to 15 m, in particular 10 m.

10. Apparatus according to any of claims 1 to 9, characterised in that the power supply unit (1) is a conventional power supply unit for pasture fencing.

## Revendications

1. Dispositif pour éloigner les pigeons des façades ou analogues, comportant
au moins un fil métallique (11) conducteur de l'électricité,
un appareil (1) raccordé au réseau électrique, pour produire des impulsions de haute tension, le fil métallique (11) conducteur de l'électricité étant relié à la sortie d'impulsions de l'appareil relié au réseau (1), et
des isolateurs (5a, 5b, 15a, 15b), portant au moins le fil métallique (11) situé à la sortie des impulsions, où
à distance du fil métallique (11) est prévu un composant conducteur de l'électricité, relié à la terre, à protéger, tel qu'une gouttière, une grille à neige ou analogue, ou un deuxième fil métallique (13) conducteur de l'électricité, relié à la sortie de masse de l'appareil relié au réseau (1) et disposé à peu près parallèlement au premier fil métallique (11), caractérisé en ce que la distance respective entre le fil métallique (11) et le composant conducteur de l'électricité et relié à la terre, respectivement le deuxième fil métallique (13) est si faible qu'un pigeon qui se pose touche par une griffe, simultanément, le fil métallique (11) et le composant conducteur de l'électricité, relié à la terre, respectivement les deux fils métalliques (11,13), le fil métallique (11 respectivement 13) présentant un diamètre de 0,01 mm à 1 mm, de préférence de 0,1 à 0,3 mm, en particulier de 0,2 mm. .

2. Dispositif selon la revendication 1, caractérisé en ce que les isolateurs (5a, 5b; 15a, 15b) sont composés d'un matériau transparent ou translucide..

3. Dispositif selon l'une des revendications 1 ou 2, caractérisé en ce que les deux fils métalliques (11,13) sont disposés à une distance mutuelle de 10 mm à 30 mm, de préférence de 15 mm à 25 mm, en particulier de 20 mm.

4. Dispositif selon l'une des revendications 1 à 3, caractérisé en ce que les isolateurs (5a, 5b, 15a, 15b) sont réalisés en verre acrylique.

5. Dispositif selon l'une des revendications 1 à 4, caractérisé en ce que les isolateurs (5a, 5b, 15a, 15b) sont disposés à une distance mutuelle de 0,1 m à 1 m, de préférence de 0,25 m à 0,75 m, en particulier de 0,5 m.

6. Dispositif selon l'une des revendications 1 à 5, caractérisé en ce que le fil métallique (11 ou 13) est guidé à travers des ouvertures, fermées en périphérie, ménagées dans les isolateurs (5a, 5b, 15a, 15b).

7. Dispositif selon l'une des revendications 1 à 6, caractérisé en ce que le fil métallique (11 ou 13) est tendu au moyen de ressorts (7a, 7b, 7c, 7d).

8. Dispositif selon la revendication 7, caractérisé en ce que le fil métallique (11 respectivement 13) est susceptible d'être accroché aux ressorts ou d'être décroché de ces derniers.

9. Dispositif selon la revendication 7 ou 8, caractérisé en ce que les ressorts (7a, 7b) sont disposés à des intervalles d'à peu près 1 m à 20 m, de préférence de 5 m à 15 m, en particulier de 10 m.

10. Dispositif selon l'une des revendications 1 à 9, caractérisé en ce que l'appareil raccordé au réseau (1) est un appareil de réseau classique, pour clôtures de prés.
